# EUROPÄISCHE PATENTSCHRIFT

(11) **EP 3 199 428 B1**
(45) Veröffentlichungstag und Bekanntmachung des Hinweises auf die Patenterteilung: **12.12.2018**
(21) Anmeldenummer: 17153164.3
(22) Anmeldetag: 26.01.2017
(51) Int. Cl.: B62D 15/02, G08G 1/16

(54) **VERFAHREN ZUM ZUMINDEST SEMI-AUTONOMEN EINPARKEN EINES KRAFTFAHRZEUGS IN EINE PARKLÜCKE MIT EINER STUFE, FAHRERASSISTENZSYSTEM SOWIE KRAFTFAHRZEUG**
METHOD FOR AT LEAST SEMI-AUTONOMOUS PARKING OF A MOTOR VEHICLE INTO A PARKING SPACE WITH KERB, DRIVER ASSISTANCE SYSTEM AND MOTOR VEHICLE
PROCÉDÉ DESTINÉ AU MOINS AU STATIONNEMENT SEMI-AUTOMATIQUE D'UN VÉHICULE AUTOMOBILE DANS UNE PLACE DE STATIONNEMENT AYANT UNE MARCHE, SYSTÈME D'ASSISTANCE AU CONDUCTEUR ET VÉHICULE AUTOMOBILE

(30) Priorität: 26.01.2016 DE 102016101356
(43) Veröffentlichungstag der Anmeldung: 02.08.2017
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)

(56) Entgegenhaltungen:
- EP-A1- 2 253 509
- DE-A1-102010 025 552
- DE-A1-102013 221 355
- US-A1- 2015 100 193

## Beschreibung

Die Erfindung betrifft ein Verfahren zum zumindest semi-autonomen Einparken eines Kraftfahrzeugs in eine, eine Stufe aufweisende Parklücke, welche mittels einer fahrzeugseitigen Sensoreinrichtung in einem Umgebungsbereich des Kraftfahrzeugs erkannt wird. Die Erfindung betrifft außerdem ein Fahrerassistenzsystem sowie ein Kraftfahrzeug. Das Dokument DE102013221355 ist als nächstliegender Stand der Technik nach dem Oberbegriff der Anspruch 1 zu sehen.

Es ist bereits aus dem Stand der Technik bekannt, Kraftfahrzeuge zumindest semi-autonom zu manövrieren, um sie beispielsweise in eine Parklücke einzuparken. Beim semi-autonomen Manövrieren übernimmt ein Fahrerassistenzsystem des Kraftfahrzeugs eine Lenkung des Kraftfahrzeugs, während ein Fahrer des Kraftfahrzeugs das Gaspedal sowie die Bremse des Kraftfahrzeugs betätigt. Beim autonomen Manövrieren beziehungsweise vollautonomen Manövrieren betätigt das Fahrerassistenzsystem zusätzlich zu der Lenkung das Gaspedal und die Bremse. Zum Durchführen eines zumindest semi-autonomen Einparkvorgangs sind aus dem Stand der Technik bereits Fahrerassistenzsysteme bekannt, welche mit Hilfe von entsprechenden Sensoren Parklücken beziehungsweise freie Stellplätze in einem Umgebungsbereich des Kraftfahrzeugs erkennen können. Dazu kann das Kraftfahrzeug beispielsweise während einer Vorbeifahrt an der Parklücke diese erkennen und vermessen, woraufhin das Kraftfahrzeug beispielsweise zumindest semi-autonom zu einer Startposition für den Einparkvorgang bewegt wird. Ausgehend von der Startposition wird eine Fahrtrajektorie bestimmt, entlang welcher das Kraftfahrzeug beim Einparken in die Parklücke bewegt wird.

Probleme ergeben sich jedoch, falls die Parklücke eine Stufe aufweist. Eine solche Stufe kann beispielsweise ein durch einen Bordstein beziehungsweise Randstein begrenzter Bereich sein, welcher gegenüber einer Fahrbahn des Kraftfahrzeugs erhöht beziehungsweise erhaben ist. Durch eine Fahrt über die Stufe sowie durch eine ungünstige Parkstellung des Kraftfahrzeugs nach dem Einparken kann das Kraftfahrzeug, insbesondere Räder des Kraftfahrzeugs, durch die Stufe beschädigt werden. Dazu beschreibt die DE 10 2004 047 483 A1 ein Einparkverfahren für ein Kraftfahrzeug, wobei das Kraftfahrzeug während des Einparkens automatisch so gelenkt wird, dass ein gewünschter Abstand zu einer seitlichen Parklückenbegrenzung bei möglichst paralleler Ausrichtung zu der Parklückenbegrenzung erreicht wird. Dabei wird das Kraftfahrzeug insbesondere so gelenkt, dass es bei dem Einparkverfahren die Parklückenbegrenzung, beispielsweise einen Bordstein, nicht berührt. Daraus ergibt sich jedoch der Nachteil, dass dieses Einparkverfahren für Parklücken, bei welchen der Bordstein derart angeordnet ist, dass dieser während des Einparkens überfahren werden muss, nicht bereitgestellt werden kann.

Es ist Aufgabe der vorliegenden Erfindung, eine Lösung bereitzustellen, wie ein Kraftfahrzeug zuverlässig und beschädigungsfrei in eine Parklücke mit einer Stufe zumindest semi-autonom eingeparkt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Ein erfindungsgemäßes Verfahren dient zum zumindest semi-autonomen Einparken eines Kraftfahrzeugs in eine, eine Stufe aufweisende Parklücke, welche mittels einer fahrzeugseitigen Sensoreinrichtung in einem Umgebungsbereich des Kraftfahrzeugs erkannt wird. Dabei wird ein von der Stufe belegter Anteil der Parklücke in einer vorbestimmten Ausdehnungsrichtung der Parklücke bestimmt und in Abhängigkeit von dem von der Stufe belegten Anteil eine Parkstellung für das Kraftfahrzeug bestimmt, in welcher das Kraftfahrzeug nach Beendigung des zumindest semi-autonomen Einparkvorgangs zumindest teilweise auf der Stufe positioniert ist.

Mittels des Verfahrens soll ein Fahrerassistenzsystem realisiert werden, durch welches das Kraftfahrzeug zumindest semi-autonom in die Parklücke eingeparkt werden kann. Dies bedeutet, dass das Kraftfahrzeug semi-autonom oder autonom beziehungsweise vollautonom in die Parklücke eingeparkt werden soll. Die Parklücke kann beispielsweise anhand von Sensordaten der fahrzeugseitigen Sensoreinrichtung erkannt werden. Zu diesem Zweck kann das Kraftfahrzeug beispielsweise bewegt werden, während der Umgebungsbereich des Kraftfahrzeugs mittels der fahrzeugseitigen Sensoreinrichtung insbesondere kontinuierlich erfasst wird. Die fahrzeugseitige Sensoreinrichtung ist insbesondere ein Ultraschallsensor und/oder eine Kamera und/oder ein Laserscanner. Insbesondere kann mit der fahrzeugseitigen Sensoreinrichtung ein Abstand zwischen dem Kraftfahrzeug und Objekten in dem Umgebungsbereich, also eine Position der Objekte, relativ zum Kraftfahrzeug bestimmt werden. Solche Objekte können beispielsweise Objekte sein, welche die Parklücke begrenzen. Auch können Objekte erkannt werden, welche in der Parklücke angeordnet sind, also beispielsweise die Stufe. Mittels der Sensoreinrichtung kann also nicht nur die Parklücke erkannt, sondern diese, beispielsweise anhand von Abstandsdaten der die Parklücke begrenzenden Objekte, vermessen werden.

Die Parklücke wird beispielsweise entlang der vorbestimmten Ausdehnungsrichtung von einem an eine Fahrbahn des Kraftfahrzeugs angrenzenden Rand und einem zu der Fahrbahn beabstandeten Rand der Parklücke begrenzt, wobei die Ränder insbesondere parallel zu einer Erstreckungsrichtung der Fahrbahn orientiert sind. Die vorbestimmte Ausdehnungsrichtung ist dabei insbesondere eine Tiefenrichtung. Die Tiefenrichtung ist dabei insbesondere senkrecht zu der Erstreckungsrichtung der Fahrbahn des Kraftfahrzeugs orientiert. Bei einer Parklücke in Form von einer Querparklücke ist dabei die Tiefenrichtung in der Parkstellung des Kraftfahrzeugs nach Beendigung des zumindest semi-autonomen Einparkvorgangs parallel zu einer Fahrzeuglängsachse des Kraftfahrzeugs orientiert, bei einer Parklücke in Form von einer Längsparklücke ist die Tiefenrichtung in der Parkstellung des Kraftfahrzeugs parallel zu einer Fahrzeugquerachse des Kraftfahrzeugs, also senkrecht zu der Fahrzeuglängsachse, orientiert. Dabei weist der zu der Fahrbahn beabstandete Rand insbesondere den tiefsten Punkt der Parklücke auf.

Die Parklücke umfasst außerdem die Stufe. Die Stufe kann beispielsweise ein von einem Bordstein begrenzter Bereich sein, wobei die Stufe beziehungsweise der Bereich gegenüber einer Fahrbahn des Kraftfahrzeugs erhaben beziehungsweise erhöht ist. Eine Erstreckungsrichtung des Bordsteins ist insbesondere senkrecht zu der vorbestimmten Ausdehnungsrichtung der Parklücke, insbesondere der Tiefenrichtung, orientiert. Die Stufenkante beziehungsweise der Randstein ist also insbesondere parallel zu der Erstreckungsrichtung der Fahrbahn orientiert.

Durch die Stufe wird dabei ein bestimmter Flächenanteil der Parklücke entlang der vorbestimmten Ausdehnungsrichtung der Parklücke belegt beziehungsweise bedeckt. Durch die Stufe ist also eine Oberfläche der Parklücke zumindest bereichsweise erhöht beziehungsweise erhaben. Dieser von der Stufe bedeckte Anteil entlang der vorbestimmten Ausdehnungsrichtung der Parklücke, insbesondere der Tiefenrichtung, wird, beispielsweise von der fahrzeugseitigen Sensoreinrichtung, erkannt. Die Stufe erstreckt sich also insbesondere von dem zu der Fahrbahn beabstandeten Rand der Parklücke entlang der Tiefenrichtung in Richtung des an die Fahrbahn angrenzenden Rands der Parklücke. Der Anteil, welcher von der Stufe belegt wird, ist dabei abhängig von einer Position der Stufenkante beziehungsweise des Bordsteins in der Parklücke. Anders ausgedrückt, ist der Anteil abhängig von einem Abstand zwischen dem an die Fahrbahn angrenzenden Rand und dem Randstein beziehungsweise zwischen dem zu der Fahrbahn beabstandeten Rand und dem Randstein entlang der vorbestimmten Ausdehnungsrichtung der Parklücke.

Dieser von der Stufe belegte Anteil der Parklücke wird, beispielsweise von einer Steuereinrichtung des Fahrerassistenzsystems, bestimmt. Der Anteil kann beispielsweise basierend auf der Position des Bordsteins in der Parklücke bestimmt werden. Dazu kann die fahrzeugseitige Sensoreinrichtung den Bordstein als Objekt erfassen sowie dessen Position bestimmen. In Abhängigkeit von dem von der Stufe entlang der vorbestimmten Ausdehnungsrichtung belegten Anteil der Parklücke wird eine spezifische Parkstellung für das Kraftfahrzeug bestimmt, welche das Kraftfahrzeug nach Beendigung des zumindest semi-autonomen Einparkvorgangs einnehmen soll. Dies bedeutet, dass eine zu dem, von der Stufe belegten Anteil korrespondierende Parkstellung für das Kraftfahrzeug bestimmt wird. Dabei ist das Kraftfahrzeug in der Parkstellung nach Beendigung des zumindest semi-autonomen Einparkvorgangs zumindest teilweise auf der Stufe positioniert beziehungsweise angeordnet. Dies bedeutet, dass das Kraftfahrzeug während des zumindest semi-autonomen Einparkvorgangs mit zumindest einem Rad über die Stufenkante bewegt wird, welches nach Beendigung des zumindest semi-autonomen Einparkvorgangs auf der Stufe angeordnet ist.

Die zu dem von der Stufe belegten Anteil korrespondierenden Parkstellungen unterscheiden sich dabei insbesondere in einem Anteil des Kraftfahrzeugs, welcher nach Beendigung des zumindest semi-autonomen Einparkvorgangs auf der Stufe positioniert ist. Anders ausgedrückt, ist der in der jeweiligen Parkstellung auf der Stufe positionierte Anteil des Kraftfahrzeugs abhängig von dem von der Stufe belegten Anteil der Parklücke. Die Parkstellung des Kraftfahrzeugs wird also an den von der Stufe belegten Anteil der Parklücke angepasst. Zum Bereitstellen der bestimmten Parkstellung kann beispielsweise von der Steuereinrichtung des Fahrerassistenzsystems eine entsprechende Fahrtrajektorie in die Parklücke bestimmt werden, welche über die Kante der Parklücke führt und entlang welcher das Kraftfahrzeug beim zumindest semi-autonomen Einparken zumindest teilweise über die Kante bewegt wird.

Durch das Anpassen der Parkstellung an den von der Stufe belegten Anteil der Parklücke kann gewährleistet werden, dass das Kraftfahrzeug in der Parkstellung nicht beschädigt wird. So kann die Parkstellung beispielsweise so vorgegeben werden, dass die Räder des Kraftfahrzeugs den Randstein beziehungsweise die Kante der Stufe nicht berühren und dadurch beschädigt oder belastet werden. Durch das Verfahren kann das Kraftfahrzeug somit besonders zuverlässig und beschädigungsfrei zumindest semi-autonom in eine Parklücke mit Stufe eingeparkt werden.

Dabei kann vorgesehen sein, dass zumindest eine die Parklücke begrenzende Parklückenbegrenzung erkannt wird, anhand der Parklückenbegrenzung eine Ausdehnung der Parklücke in der vorbestimmten Ausdehnungsrichtung bestimmt wird und basierend auf der Ausdehnung der von der Stufen belegte Anteil bestimmt wird. Zum Bestimmen des Anteils wird also die Ausdehnung der Parklücke entlang der vorbestimmten Ausdehnungsrichtung bestimmt. Insbesondere wird also anhand der Parklückenbegrenzung eine Tiefe der Parklücke bestimmt. Dazu wird die Parklückenbegrenzung beispielsweise von der fahrzeugseitigen Sensoreinrichtung erkannt. Daraufhin kann eine Position beziehungsweise ein Abstand des sich parallel zu der Fahrbahn erstreckenden und zu der Fahrbahn beabstandeten Rand der Parklücke relativ zu dem an die Fahrbahn angrenzenden Rand der Parklücke bestimmt werden.

Zur Bestimmung des von der Stufe belegten Anteils kann dann eine Position beziehungsweise Lage des Randsteins in der Parklücke bestimmt werden. Beispielweise kann ein Abstand zwischen dem zu der Fahrbahn beabstandeten Rand der Parklücke und der Stufenkante bestimmt werden. Es wird also erfasst, wie weit der Randstein von dem tiefsten Punkt der Parklücke entfernt ist. Mit anderen Worten bedeutet dies, dass erfasst wird, wie weit die Stufe in die Parklücke entlang der Tiefenrichtung in Richtung der Fahrbahn des Kraftfahrzeugs hineinragt. Der Abstand zwischen dem zu der Fahrbahn beabstandeten Rand und der Stufenkante wird mit der erfassten Ausdehnung der Parklücke, insbesondere der Tiefe der Parklücke, verglichen. Auch kann ein Abstand zwischen dem an die Fahrbahn angrenzenden Rand und dem Randstein bestimmt werden und basierend auf diesem Abstand der von der Stufe nicht belegte Anteil der Parklücke bestimmt werden. Basierend auf dem nicht belegten Anteil kann der belegte Anteil bestimmt werden. Durch die Erfassung der Parklückenbegrenzung kann somit der von der Stufe belegte Anteil besonders genau bestimmt werden.

Vorzugsweise wird als die Parklückenbegrenzung zumindest ein an die Parklücke angrenzend geparktes Kraftfahrzeug erkannt, zumindest eine geometrische Abmessung des angrenzend geparkten Kraftfahrzeugs bestimmt wird und anhand der zumindest einen geometrischen Abmessung des angrenzend geparkten Kraftfahrzeugs die Ausdehnung der Parklücke bestimmt wird. Dazu kann das geparkte Kraftfahrzeug beispielsweise von der Sensoreinrichtung als ein Objekt erkannt werden und Abmessungen des Objektes bestimmt werden. Dabei wird die Ausdehnung der Parklücke entlang der vorbestimmten Ausdehnungsrichtung, insbesondere die Tiefe der Parklücke, basierend auf der zumindest einen geometrischen Abmessung des Kraftfahrzeugs entlang der vorbestimmten Ausdehnungsrichtung bestimmt. Dies bedeutet, dass eine Tiefe der Parklücke anhand des anderen, geparkten Kraftfahrzeugs bestimmt werden kann. Die Position des zu der Fahrbahn beabstandeten Rands der Parklücke wird also anhand des geparkten Kraftfahrzeugs bestimmt. Bei einer Längsparklücke kann als die geometrische Abmessung beispielsweise eine Breite des anderen Kraftfahrzeugs erkannt werden, welches in einer benachbarten Längsparklücke abgestellt ist. Der Abstand zwischen den beiden Rändern und damit die Ausdehnung entsprechen also in etwa der Breite des anderen Kraftfahrzeugs. Bei einer Querparklücke kann als die zumindest eine geometrische Abmessung eine Länge des anderen Kraftfahrzeugs erkannt werden, welches in einer benachbarten Querparklücke abgestellt ist. Der Abstand zwischen den beiden Rändern und damit die Ausdehnung entsprechen also in etwa der Länge des anderen Kraftfahrzeugs.

Alternativ oder zusätzlich kann als die Parklückenbegrenzung eine Markierung auf einer Oberfläche der Parklücke erkannt werden und anhand der Markierung die Ausdehnung bestimmt werden. Die Markierung kann beispielsweise in Form von einer Linie auf der Oberfläche der Parklücke ausgebildet sein, welche von der fahrzeugseitigen Sensoreinrichtung, insbesondere einer fahrzeugseitigen Kamera, erkannt wird. Falls die Markierung den zu der Fahrbahn beabstandeten Rand markiert, so kann ein Abstand zwischen der Markierung und dem an die Fahrbahn angrenzenden Rand der Parklücke bestimmt werden und als die Tiefe der Parklücke bestimmt werden. Falls die Markierung beispielsweise zwei benachbarte Parklücken von einander trennt und somit parallel zu der Tiefenrichtung angeordnet ist, kann anhand einer Länge dieser Linie die Tiefe der Parklücke erkannt werden. Dies ist besonders vorteilhaft, falls keine anderen Kraftfahrzeuge in benachbarten Parklücken abgestellt sind, anhand welcher die Ausdehnung der Parklücke erfasst werden könnte.

Besonders bevorzugt wird zum Bestimmen der jeweiligen Parkstellung eine zu dem von der Stufe belegten Anteil korrespondierende Anzahl von Rädern des Kraftfahrzeugs bestimmt, mit welchen das Kraftfahrzeug nach Beendigung des zumindest semi-autonomen Einparkvorgangs auf der Stufe positioniert wird. Anders ausgedrückt, ist die zu dem Anteil der Parklücke korrespondierende Parkstellung durch die Anzahl an Rädern des Kraftfahrzeugs charakterisiert, welche sich nach Beendigung des Einparkvorgangs auf der Stufe befinden. Die Parkstellung wird dabei so bestimmt, dass die Räder des Kraftfahrzeugs auf und/oder unter der Stufe derart zu der Stufenkante positioniert werden, dass diese in dem abgestellten Zustand des Kraftfahrzeugs nicht beschädigt oder belastet werden.

Dabei kann vorgesehen sein, dass eine erste Parkstellung für das Kraftfahrzeug bestimmt wird, in welcher das Kraftfahrzeug mit zwei Rädern auf der Stufe positioniert wird, wenn der von der Stufe belegte Anteil einen vorbestimmten Grenzwert unterschreitet, und zweite Parkstellung für das Kraftfahrzeug bestimmt wird, in welcher das Kraftfahrzeug mit vier Rädern auf der Stufe positioniert wird, wenn der von der Stufe belegte Anteil den vorbestimmten Grenzwert überschreitet. Es werden also zwei Parkstellungen vorgegeben, wobei sich in der ersten Parkstellung des Kraftfahrzeugs zwei Räder des Kraftfahrzeugs auf der Stufe befinden und zwei weitere Räder des Kraftfahrzeugs auf der Fahrbahn befinden. In der zweiten Parkstellung befinden sich alle vier Räder des Kraftfahrzeugs auf der Stufe. Dabei wird die erste Parkstellung vorgegeben, wenn der von der Stufe belegte Anteil den vorbestimmten Grenzwert unterschreitet, und die zweite Parkstellung vorgegeben, wenn der von der Stufe belegte Anteil den vorbestimmten Grenzwert überschreitet. Als der Grenzwert kann beispielsweise ein Wert von 80% vorgegeben werden. Wenn die Stufe also mehr als 80% der Parklücke beziehungsweise der Parklückenfläche einnimmt, also um mehr als 80% entlang der vorbestimmten Ausdehnungsrichtung in die Parklücke hineinragt, wird das Kraftfahrzeug vollständig auf der Stufe positioniert. Der Erfindung liegt hierbei die Erkenntnis zugrunde, dass die auf der Fahrbahn positionierten Räder, insbesondere die Reifen, beschädigt werden können, wenn diese die Stufenkante beziehungsweise den Bordstein berühren beziehungsweise an dem Bordstein anstehen. Je weiter also die Stufe in die Parklücke hineinragt, desto größer ist die Wahrscheinlichkeit, dass die Reifen an der Kante anstehen. Um dies zu verhindern, wird die zweite Parkstellung vorgegeben und das Kraftfahrzeug vollständig auf der Stufe positioniert, falls der Bordstein zu weit in die Parklücke hineinragt, also der Anteil den vorbestimmten Grenzwert überschreitet. Es kann aber auch schädlich für die auf der Stufe positionierten Reifen sein, wenn diese zu nah an der Stufenkante positioniert sind und die Räder beispielsweise nicht mit der kompletten Reifenbreite oder Auflagefläche auf der Stufe positioniert sind. Um dies zu verhindern, wird die erste Parkstellung vorgegeben und das Kraftfahrzeug nur teilweise auf der Stufe positioniert, falls der Bordstein nicht weit genug in die Parklücke hineinragt, also der Anteil den vorbestimmten Grenzwert unterschreitet. Somit kann in vorteilhafter Weise eine besonders Reifen schonende Parkstellung für das Kraftfahrzeug bereitgestellt werden.

Erfindungsgemäß wird die Parklücke als eine Querparklücke erkannt und anhand des von der Stufe belegten Anteils der Querparklücke bestimmt, ob das Kraftfahrzeug in der ersten Parkstellung mit den Rädern von nur einer Achse oder in der zweiten Parkstellung mit den Rädern von beiden Achsen auf der Stufe positioniert wird. Bei einer Querparklücke wird das Kraftfahrzeug derart eingeparkt, dass sich die Kante der Stufe beziehungsweise der Randstein senkrecht zu der Fahrzeuglängsachse und damit parallel zu der Vorderachse und der Hinterachse erstreckt. Dabei wird entschieden, ob nur die Räder der Vorderachse des Kraftfahrzeugs, also die Vorderräder, nur die Räder der Hinterachse des Kraftfahrzeugs, also nur die Hinterräder, oder die Räder beider Achsen des Kraftfahrzeugs, also alle Räder, auf der Stufe positioniert werden. Wenn beispielsweise der Anteil den vorbestimmten Grenzwert unterschreitet, so werden beim Rückwärtseinparken des Kraftfahrzeugs in die Querparklücke nur die Räder der Hinterachse über den Bordstein bewegt und auf der Stufe positioniert und beim Vorwärtseinparken des Kraftfahrzeugs in die Querparklücke nur die Räder der Vorderachse über den Bordstein bewegt und auf der Stufe positioniert. Wenn der von der Stufe belegte Anteil der Parklücke den vorbestimmten Grenzwert überschreitet, so werden alle Räder über den Bordstein bewegt und das Kraftfahrzeug mit allen Rädern vollständig auf der Stufe positioniert. Somit kann verhindert werden, dass die Räder derart an der Kante der Stufe positioniert werden, dass die Kante in eine Lauffläche der Reifen entlang einer Reifenbreite hineindrückt und somit die Lauffläche der Reifen beschädigt wird.

Auch kann vorgesehen sein, dass als die Parklücke eine Längsparklücke erkannt wird und anhand des von der Stufe belegten Anteils der Längsparklücke entschieden wird, ob das Kraftfahrzeug in der ersten Parkstellung mit den Rädern von nur einer Seite des Kraftfahrzeugs oder in der zweiten Parkstellung mit den Rädern von beiden Seiten des Kraftfahrzeugs auf der Stufe positioniert wird. Bei einer Längsparklücke wird das Kraftfahrzeug derart eingeparkt, dass sich die Kante der Stufe beziehungsweise der Randstein parallel zu der Fahrzeuglängsachse und damit parallel zu den Seiten beziehungsweise Seitenbereichen des Kraftfahrzeugs erstreckt. Dabei wird entschieden, ob das Kraftfahrzeug nur mit den Rädern einer Fahrerseite des Kraftfahrzeugs, nur mit den Rädern einer Beifahrerseite des Kraftfahrzeugs oder vollständig auf der Stufe positioniert wird. Somit kann verhindert werden, dass die Räder derart an der Kante der Stufe positioniert werden, dass eine der Fahrbahn abgewandte Innenseite der Reifen beschädigt wird.

Die Erfindung betrifft außerdem ein Fahrerassistenzsystem für ein Kraftfahrzeug zum zumindest semi-autonomen Einparken des Kraftfahrzeugs in eine, eine Stufe aufweisende Parklücke, wobei das Fahrerassistenzsystem zum Durchführen des erfindungsgemäßen Verfahrens ausgelegt ist. Das als Parkassistenzsystem ausgebildete Fahrerassistenzsystem weist dabei die fahrzeugseitige Sensoreinrichtung sowie eine Steuereinrichtung auf, welche zum Bestimmen der Parkstellung ausgelegt ist. Vorzugsweise ist die fahrzeugseitige Sensoreinrichtung zum Erfassen der die Stufe aufweisenden Parklücke und des von der Stufe belegten Anteils der Parklücke entlang der vorbestimmten Ausdehnungsrichtung als ein Ultraschallsensor und/oder ein Laserscanner und/oder eine Kamera ausgebildet.

Ein erfindungsgemäßes Kraftfahrzeug umfasst ein erfindungsgemäßes Fahrerassistenzsystem. Das Kraftfahrzeug ist dabei insbesondere als ein Personenkraftwagen ausgebildet.

Mit Angaben "vor", "hinter", "neben", "rückwärts", "vorwärts", "Vorwärtsrichtung", "Fahrzeuglängsrichtung" (L), "Fahrzeugquerrichtung" (Q), "Tiefenrichtung" (R) "seitlich" etc. sind bei einem in eine Fahrzeuglängsrichtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs;
- Fig. 2: eine schematische Darstellung des Kraftfahrzeugs in einer ersten Parkstellung in einer Längsparklücke;
- Fig. 3: das Kraftfahrzeug gemäß Fig. 1 in einer zweiten Parkstellung in einer Längsparklücke;
- Fig. 4: das Kraftfahrzeug gemäß Fig. 1 in einer ersten Parkstellung in einer Querparklücke; und
- Fig. 5: das Kraftfahrzeug gemäß Fig. 1 in einer zweiten Parkstellung in einer Querparklücke.

In den Figuren sind gleiche sowie funktionsgleiche Elemente mit den gleichen Bezugszeichen versehen.

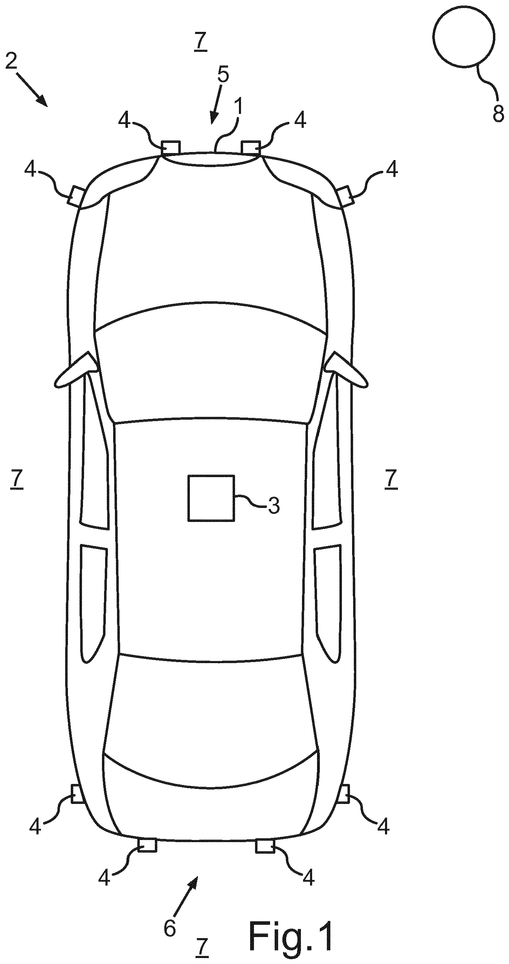

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches als ein Parkassistenzsystem ausgebildet ist und das Kraftfahrzeug 1 zumindest semi-autonom manövrieren kann. Das Fahrerassistenzsystem 2 umfasst wiederum eine Steuereinrichtung 3, welche beispielsweise durch ein fahrzeugseitiges Steuergerät (ECU - Electronic Control Unit) ausgebildet sein kann. Zum semi-autonomen Manövrieren des Kraftfahrzeugs 1 kann die Steuereinrichtung 3 in eine Lenkung des Kraftfahrzeugs 1 eingreifen, während ein Fahrer des Kraftfahrzeugs 1 das Gaspedal sowie eine Bremse des Kraftfahrzeugs 1 betätigt. Zum autonomen beziehungsweise vollautonomen Manövrieren des Kraftfahrzeugs 1 kann die Steuereinrichtung 3 zusätzlich zu der Lenkung des Kraftfahrzeugs 1 die Bremse sowie das Gaspedal des Kraftfahrzeugs 1 betätigen. Darüber hinaus umfasst das Fahrerassistenzsystem 2 zumindest eine fahrzeugseitige Sensoreinrichtung 4, welche zum Überwachen eines Umgebungsbereiches 7 des Kraftfahrzeugs 1 ausgebildet ist.

Im vorliegenden Fall umfasst das Fahrerassistenzsystem 2 acht Sensoreinrichtungen 4, welche im vorliegenden Fall jeweils als Ultraschallsensoren ausgebildet sind. Es kann aber auch vorgesehen sein, dass die Sensoreinrichtungen 4 als Kameras und/oder Laserscanner ausgebildet sind. Hier sind vier fahrzeugseitige Sensoreinrichtungen 4 an einem Frontbereich 5 des Kraftfahrzeugs 1 zum Überwachen des Umgebungsbereiches 7 vor und neben dem Kraftfahrzeug 1 angeordnet und vier weitere Sensoreinrichtungen 4 an einem Heckbereich 6 des Kraftfahrzeugs 1 zum Überwachen des Umgebungsbereiches 7 hinter und neben dem Kraftfahrzeug 1 angeordnet. Insbesondere sind die Sensoreinrichtungen 4 dazu ausgelegt, ein Objekt 8 in dem Umgebungsbereich 7 des Kraftfahrzeugs 1 zu erfassen sowie eine relative Lage zwischen dem Objekt 8 und dem Kraftfahrzeug 1 beziehungsweise einen Abstand des Objektes 8 relativ zum Kraftfahrzeug 1 zu bestimmen.

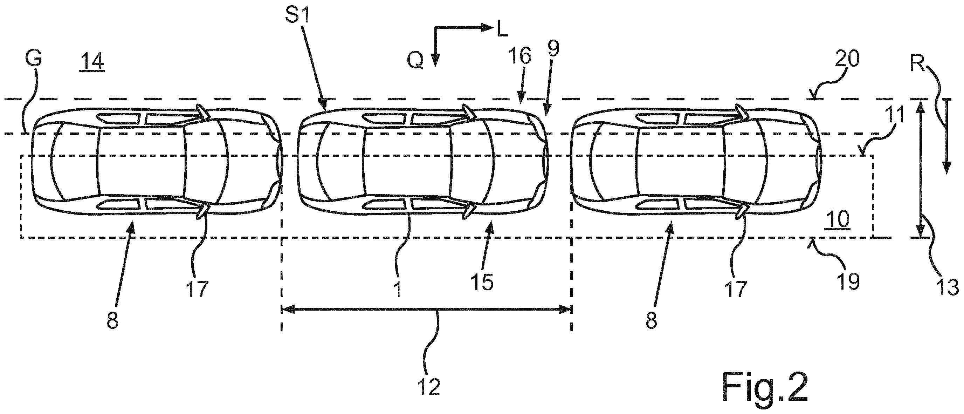

Fig. 2 zeigt das Kraftfahrzeug 1, welches durch das Fahrerassistenzsystem 2 zumindest semi-autonom in eine Parklücke 9 eingeparkt wurde und sich dabei in einer ersten Parkstellung S1 in der Parklücke 9 befindet. Die Parklücke 9 weist dabei eine Stufe 10 auf, welche durch eine Kante, beispielsweise in Form von einem Bordstein 11, begrenzt ist. Die Parklücke 9 ist im vorliegenden Fall als eine Längsparklücke ausgebildet. Somit erstrecken sich eine Länge 12 der Parklücke 9 sowie der Bordstein 11 hier entlang einer Erstreckungsrichtung einer Fahrbahn 14 des Kraftfahrzeugs 1. Außerdem erstrecken sich die Länge 12 der Parklücke 9 sowie der Bordstein 11 in der Parkstellung des Kraftfahrzeugs 1 entlang einer Fahrzeuglängsachse L des Kraftfahrzeugs 1. Eine Tiefe der Parklücke 9 ist durch einen Abstand zwischen einem von der Fahrbahn 14 beabstandeten Rand 19 und einem an die Fahrbahn 14 angrenzenden Rand 20 bestimmt.

Die Parkstellung des Kraftfahrzeugs 1 wird dabei von dem Fahrerassistenzsystem 2 in Abhängigkeit von der Stufe 10 in der Parklücke 9 bestimmt. Die Parkstellung wird dabei so bestimmt, dass die Räder des Kraftfahrzeugs 1, beispielsweise durch Anstehen der Räder an dem Bordstein 11, nicht beschädigt werden. Zum Bestimmen der Parkstellung für das Kraftfahrzeug 1 wird dabei ein von der Stufe 10 belegter Anteil der Parklücke 9 entlang einer vorbestimmten Ausdehnungsrichtung R der Parklücke 9, insbesondere entlang einer Tiefenrichtung, bestimmt. Die vorbestimmte Ausdehnungsrichtung R erstreckt sich hier senkrecht zur Erstreckungsrichtung der Fahrbahn 14. In der Parkstellung des Kraftfahrzeugs 1 erstreckt sich die vorbestimmte Ausdehnungsrichtung R entlang einer Fahrzeugquerachse Q des Kraftfahrzeugs 1, welche senkrecht zur Fahrzeuglängsachse L orientiert ist.

Zum Bestimmen des von der Stufe 10 belegten Anteils kann beispielsweise eine räumliche Ausdehnung 13 der Parklücke 9 entlang der vorbestimmten Ausdehnungsrichtung R bestimmt werden. Hier wird als die räumliche Ausdehnung 13 die Tiefe der Parklücke 9 bestimmt, welche sich bei einer Längsparklücke in Fahrzeugquerrichtung Q zumindest über eine Breite des Kraftfahrzeugs 1 erstreckt. Beispielsweise kann zum Bestimmen der Ausdehnung 13 eine Parklückenbegrenzung der Parklücke 9 erkannt werden. Als eine solche Parklückenbegrenzung kann beispielsweise zumindest ein anderes Kraftfahrzeug 17 erkannt werden, welches angrenzend an die Parklücke 9 geparkt ist und welches von der fahrzeugseitigen Sensoreinrichtung 4 als ein Objekt 8 erkannt wird. Zumindest eine geometrische Abmessung des anderen Kraftfahrzeugs 17, beispielsweise eine Breite des anderen Kraftfahrzeugs 17, kann als die Ausdehnung 13 bestimmt werden. Dadurch ist eine ungefähre erste Position des zu der Fahrbahn 14 beabstandeten Rands 19 der Parklücke 9 vorgegeben. Außerdem kann eine zweite Position des Bordsteins 11 in der Parklücke 9 entlang der vorbestimmten Ausdehnungsrichtung R relativ zu dem zu der Fahrbahn 14 beabstandeten Rand 19 bestimmt werden. Anhand der beiden Positionen kann dann der von der Stufe 10 belegte Anteil bestimmt werden.

Auch kann vorgesehen sein, dass hier nicht gezeigte Markierungen, beispielsweise in Form von Begrenzungslinien, auf einer Oberfläche der Parklücke 9 und/oder der Fahrbahn 14 des Kraftfahrzeugs 1 als Parklückenbegrenzungen der Parklücke 9 erkannt werden. Anhand dieser Markierungen kann zum Bestimmen des von der Stufe 10 belegten Anteils ebenfalls die Ausdehnung 13 der Parklücke 9 entlang der vorbestimmten Ausdehnungsrichtung R bestimmt werden.

Dann wird anhand des bestimmten Anteils die Parkstellung für das Kraftfahrzeug 1 bestimmt, welche das Kraftfahrzeug 1 nach Beendigung des zumindest semi-autonomen Einparkvorgangs einnimmt. Hier wird die erste Parkstellung S1 bestimmt, in welcher die zwei Räder einer Beifahrerseite 15 des Kraftfahrzeugs 1 auf der Stufe 10 positioniert sind und die zwei Räder einer Fahrerseite 16 des Kraftfahrzeugs 1 unterhalb der Stufe 10 positioniert sind, da der von der Stufe 10 belegte Anteil einen vorbestimmten Grenzwert G unterschreitet. Der vorbestimmte Grenzwert G kann beispielsweise bei 80% liegen. Dadurch dass der Anteil den Grenzwert G unterschreitet, können nämlich die Räder der Fahrerseite 16 beabstandet zu dem Bordstein 11 unterhalb der Stufe 10 in der Parklücke 9 positioniert werden.

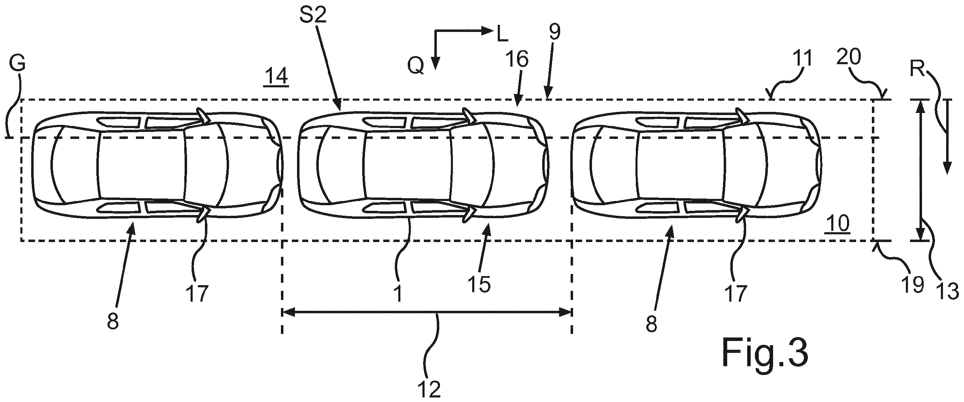

Fig. 3 zeigt das Kraftfahrzeug 1 in einer als Längsparklücke ausgebildeten Parklücke 9 in einer zweiten Parkstellung S2. Hier befinden sich alle vier Räder des Kraftfahrzeugs 1, also die Räder der Fahrerseite 16 und der Beifahrerseite 15, auf der Stufe 10, da der von der Stufe 10 belegte Anteil der Parklücke 9 den vorbestimmten Grenzwert G überschreitet. Die Räder der Fahrerseite 16 können also hier nicht mehr unterhalb der Stufe 10 beabstandet zu dem Bordstein 11 positioniert werden, wodurch eine Beschädigung der Räder drohen kann. Daher wird das Kraftfahrzeug 1 vollständig auf der Stufe 10 positioniert. Somit kann verhindert werden, dass die Räder des Kraftfahrzeugs 1 beschädigt werden.

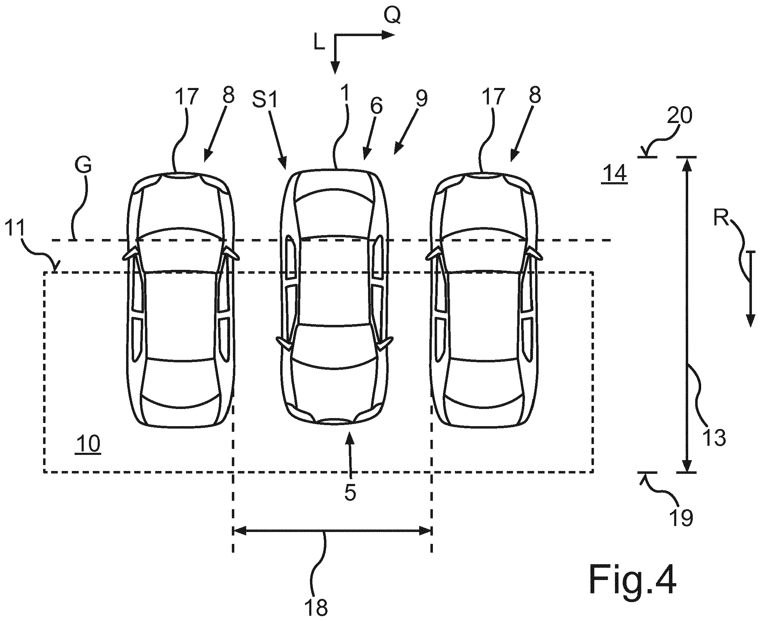

Fig. 4 zeigt das Kraftfahrzeug 1, welches durch das Fahrerassistenzsystem 2 zumindest semi-autonom in eine Parklücke 9 in Form von einer Querparklücke eingeparkt wurde und sich dabei in einer ersten Parkstellung S1 in der Parklücke 9 befindet. Eine Breite 18 der Querparklücke erstreckt sich hier entlang der Fahrzeugquerachse Q des Kraftfahrzeugs 1. Die Tiefe der Parklücke 9 ist wiederum durch den Abstand zwischen dem von der Fahrbahn 14 beabstandeten Rand 19 und dem an die Fahrbahn 14 angrenzenden Rand 20 bestimmt. Der Bordstein 11 erstreckt sich in der Parkstellung des Kraftfahrzeugs 1 entlang der Fahrzeugquerachse Q. Die vorbestimme Ausdehnungsrichtung R erstreckt sich wiederum senkrecht zur Erstreckungsrichtung der Fahrbahn 14, wobei die vorbestimmte Ausdehnungsrichtung R bei der als Querparklücke ausgebildeten Parklücke 9 in der Parkstellung des Kraftfahrzeugs 1 entlang der Fahrzeuglängsachse L orientiert ist.

Die Parkstellung des Kraftfahrzeugs 1 wird wieder in Abhängigkeit von dem von der Stufe 10 belegten Anteil der Parklücke 9 bestimmt. Hier unterschreitet der Anteil den Grenzwert G, wodurch die erste Parkstellung S1 für das Kraftfahrzeug 1 bereitgestellt wird, bei welcher zwei Räder des Kraftfahrzeugs 1 auf der Stufe 10 positioniert sind und die zwei anderen Räder unterhalb der Stufe 10 positioniert sind. Hier wurde das Kraftfahrzeug 1 durch das Fahrerassistenzsystem 2 vorwärts in die Parklücke 9 eingeparkt, sodass in der ersten Parkstellung S1 die beiden Räder der Vorderachse, also die dem Frontbereich 5 zugeordneten Räder des Kraftfahrzeugs 1, auf der Stufe 10 positioniert sind. Würde das Kraftfahrzeug 1 rückwärts in die Parklücke 9 eingeparkt, so befänden sich in der ersten Parkstellung S1 die Räder der Hinterachse, also die dem Heckbereich 6 zugeordneten Räder des Kraftfahrzeugs 1, auf der Stufe 10.

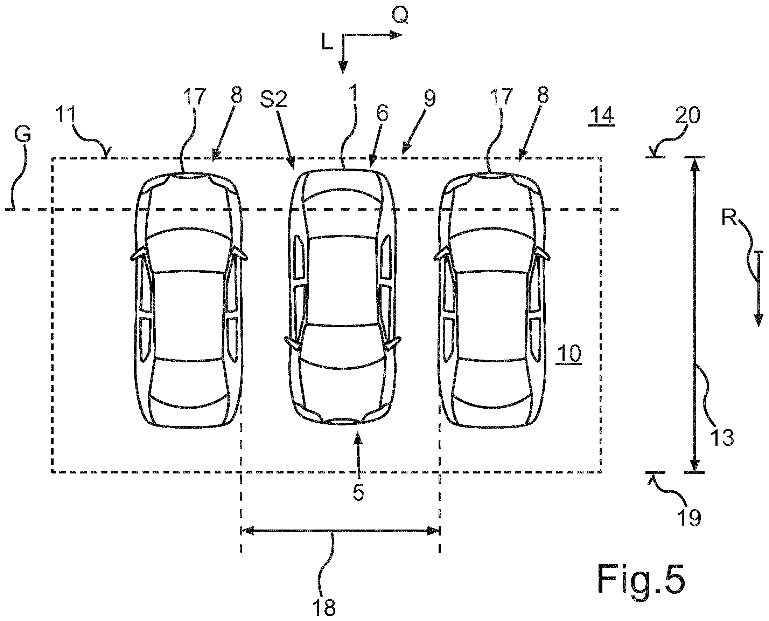

In Fig. 5 ist das Kraftfahrzeug 1 nach dem Einparken in eine als Querparklücke ausgebildete Parklücke 9 in der zweiten Parkstellung S2 gezeigt, bei welcher sich alle Räder des Kraftfahrzeugs 1 auf der Stufe 10 befinden und somit das Kraftfahrzeug 1 vollständig auf der Stufe 10 positioniert ist. Hier belegt die Stufe 10 nämlich die komplette Parklücke 9 entlang der vorbestimmten Ausdehnungsrichtung R, sodass der Bordstein 11 dem an die Fahrbahn 14 angrenzenden Rand 20 entspricht und der von der Stufe 10 bedeckte Anteil der Parklücke 9 den vorbestimmten Grenzwert G von beispielsweise 80% überschreitet.

## Patentansprüche

1. Verfahren zum zumindest semi-autonomen Einparken eines Kraftfahrzeugs (1) in eine, eine Stufe (10) aufweisende Parklücke (9), welche mittels einer fahrzeugseitigen Sensoreinrichtung (4) in einem Umgebungsbereich (7) des Kraftfahrzeugs (1) erkannt wird,
wobei ein von der Stufe (10) belegter Anteil der Parklücke (9) entlang einer vorbestimmten Ausdehnungsrichtung (R) der Parklücke (9) bestimmt wird und in Abhängigkeit von dem von der Stufe (10) belegten Anteil eine Parkstellung (S1, S2) für das Kraftfahrzeug (1) bestimmt wird, in welcher das Kraftfahrzeug (1) nach Beendigung des zumindest semi-autonomen Einparkvorgangs zumindest teilweise auf der Stufe (10) positioniert ist, **dadurch gekennzeichnet, dass**
als die Parklücke (9) eine Querparklücke erkannt wird und anhand des von der Stufe (10) belegten Anteils der Querparklücke bestimmt wird, ob das Kraftfahrzeug (1) in der ersten Parkstellung (S1) mit den Rädern von nur einer Achse oder in der zweiten Parkstellung (S2) mit den Rädern von beiden Achsen auf der Stufe (10) positioniert wird.

2. Verfahren nach Anspruch 1,
**dadurch gekennzeichnet, dass**
ein von der Stufe (10) belegter Anteil der Parklücke (9) in einer Tiefenrichtung als die Ausdehnungsrichtung (R) der Parklücke (9) erkannt wird.

3. Verfahren nach Anspruch 1 oder 2,
**dadurch gekennzeichnet, dass**
zumindest eine die Parklücke (9) begrenzende Parklückenbegrenzung erkannt wird, anhand der Parklückenbegrenzung eine Ausdehnung (13) der Parklücke (9) in der vorbestimmten Ausdehnungsrichtung (R) bestimmt wird und basierend auf der Ausdehnung (13) der Parklücke (9) der von der Stufe (10) belegte Anteil bestimmt wird.

4. Verfahren nach Anspruch 3,
**dadurch gekennzeichnet, dass**
als die Parklückenbegrenzung zumindest ein an die Parklücke (9) angrenzend geparktes Kraftfahrzeug (17) erkannt wird, zumindest eine geometrische Abmessung des angrenzend geparkten Kraftfahrzeugs (17) bestimmt wird und anhand der zumindest einen geometrischen Abmessung des angrenzend geparkten Kraftfahrzeugs (17) die Ausdehnung (13) der Parklücke (9) bestimmt wird.

5. Verfahren nach Anspruch 3 oder 4,
**dadurch gekennzeichnet, dass**
als die Parklückenbegrenzung eine Markierung auf einer Oberfläche der Parklücke (9) erkannt wird und anhand der Markierung die Ausdehnung (13) der Parklücke (9) bestimmt wird.

6. Verfahren nach einem der vorhergehenden Ansprüche,
**dadurch gekennzeichnet, dass**
zum Bestimmen der jeweiligen Parkstellung (S1, S2) eine zu dem von der Stufe (10) belegten Anteil korrespondierende Anzahl von Rädern des Kraftfahrzeugs (1) bestimmt, mit welchen das Kraftfahrzeug (1) nach Beendigung des zumindest semi-autonomen Einparkvorgangs auf der Stufe (10) positioniert wird.

7. Verfahren nach Anspruch 6,
**dadurch gekennzeichnet, dass**
eine erste Parkstellung (S1) für das Kraftfahrzeug (1) bestimmt wird, in welcher das Kraftfahrzeug (1) mit zwei Rädern auf der Stufe (10) positioniert wird, wenn der von der Stufe (10) belegte Anteil einen vorbestimmten Grenzwert (G) unterschreitet, und eine zweite Parkstellung (S2) für das Kraftfahrzeug (1) bestimmt wird, in welcher das Kraftfahrzeug (1) mit vier Rädern auf der Stufe (10) positioniert wird, wenn der von der Stufe (10) belegte Anteil den vorbestimmten Grenzwert (G) überschreitet.

8. Verfahren nach Anspruch 7,
**dadurch gekennzeichnet, dass**
als der Grenzwert (G) ein Wert von 80% vorgegeben wird.

9. Verfahren nach Anspruch 7 oder 8,
**dadurch gekennzeichnet, dass**
als die Parklücke (9) eine Längsparklücke erkannt wird und anhand des von der Stufe (10) belegten Anteils der Längsparklücke entschieden wird, ob das Kraftfahrzeug (1) in einer ersten Parkstellung (S1) mit den Rädern von nur einer Seite des Kraftfahrzeugs (1) oder in einer zweiten Parkstellung (S2) mit den Rädern von beiden Seiten des Kraftfahrzeugs (1) auf der Stufe (10) positioniert wird.

10. Verfahren nach einem der vorhergehenden Ansprüche,
**dadurch gekennzeichnet, dass**
die die Stufe (10) aufweisende Parklücke (9) und der von der Stufe (10) belegte Anteil der Parklücke (9) entlang der vorbestimmten Ausdehnungsrichtung (R) mittels eines Ultraschallsensors und/oder eines Laserscanners und/oder einer Kamera als die fahrzeugseitige Sensoreinrichtung (4) erkannt werden.

11. Fahrerassistenzsystem (2) für ein Kraftfahrzeug (1) zum zumindest semi-autonomen Einparken des Kraftfahrzeugs (1) in eine, eine Stufe (10) aufweisende Parklücke (9), welches zum Durchführen eines Verfahrens nach einem der vorhergehenden Ansprüche ausgelegt ist.

12. Kraftfahrzeug (1) mit einem Fahrerassistenzsystem (2) nach Anspruch 11.

## Claims

1. Method for at least semi-autonomously parking a motor vehicle (1) in a parking gap (9) having a step (10), said parking gap being identified in a surrounding area (7) of the motor vehicle (1) by means of a vehicle-side sensor device (4),
wherein a proportion of the parking gap (9) occupied by the step (10) along a predetermined direction (R) of extent of the parking gap (9) is determined and, depending on the proportion occupied by the step (10), a parking position (S1, S2) for the motor vehicle (1) is determined in which the motor vehicle (1) is at least partly positioned on the step (10) after the end of the at least semi-autonomous parking procedure, **characterized in that** a transverse parking gap is identified as the parking gap (9) and the proportion of the transverse parking gap that is occupied by the step (10) is taken as a basis for determining whether the motor vehicle (1) is positioned on the step (10) with the wheels of only one axle in the first parking position (S1) or with the wheels of both axles in the second parking position (S2).

2. Method according to Claim 1,
**characterized in that**
a proportion of the parking gap (9) that is occupied by the step (10) in a depth direction is identified as the direction (R) of extent of the parking gap (9).

3. Method according to Claim 1 or 2,
**characterized in that**
at least one parking gap boundary bounding the parking gap (9) is identified, an extent (13) of the parking gap (9) in the predetermined direction (R) of extent is determined on the basis of the parking gap boundary, and the proportion occupied by the step (10) is determined on the basis of the extent (13) of the parking gap (9).

4. Method according to Claim 3,
**characterized in that**
at least one motor vehicle (17) parked adjacently to the parking gap (9) is identified as the parking gap boundary, at least one geometric dimension of the adjacently parked motor vehicle (17) is determined, and the extent (13) of the parking gap (9) is determined on the basis of the at least one geometric dimension of the adjacently parked motor vehicle (17).

5. Method according to Claim 3 or 4,
**characterized in that**
a marking on a surface of the parking gap (9) is identified as the parking gap boundary, and the extent (13) of the parking gap (9) is determined on the basis of the marking.

6. Method according to any of the preceding claims, **characterized in that**
a number of wheels of the motor vehicle (1) with which the motor vehicle (1) is positioned on the step (10) after the end of the at least semi-autonomous parking procedure, said number corresponding to the proportion occupied by the step (10), is determined for the purpose of determining the respective parking position (S1, S2).

7. Method according to Claim 6,
**characterized in that**
a first parking position (S1) for the motor vehicle (1) is determined, in which the motor vehicle (1) is positioned with two wheels on the step (10), if the proportion occupied by the step (10) falls below a predetermined limit value (G), and a second parking position (S2) for the motor vehicle (1) is determined, in which the motor vehicle (1) is positioned with four wheels on the step (10), if the proportion occupied by the step (10) exceeds the predetermined limit value (G).

8. Method according to Claim 7,
**characterized in that**
a value of 80% is predefined as the limit value (G) .

9. Method according to Claim 7 or 8,
**characterized in that**
a longitudinal parking gap is identified as the parking gap (9) and the proportion of the longitudinal parking gap that is occupied by the step (10) is taken as a basis for deciding whether the motor vehicle (1) is positioned on the step (10) with the wheels of only one side of the motor vehicle (1) in a first parking position (S1) or with the wheels of both sides of the motor vehicle (1) in a second parking position (S2).

10. Method according to any of the preceding claims, **characterized in that**
the parking gap (9) having the step (10) and the proportion of the parking gap (9) that is occupied by the step (10) along the predetermined direction (R) of extent are identified by means of an ultrasonic sensor and/or a laser scanner and/or a camera as the vehicle-side sensor device (4).

11. Driver assistance system (2) for a motor vehicle (1) for at least semi-autonomously parking the motor vehicle (1) in a parking gap (9) having a step (10), which driver assistance system is designed for carrying out a method according to any of the preceding claims.

12. Motor vehicle (1) comprising a driver assistance system (2) according to Claim 11.

## Revendications

1. Procédé d'entrée en stationnement au moins semi-autonome d'un véhicule automobile (1) dans une place de stationnement (9) qui présente un gradin (10), laquelle est reconnue dans une zone environnante (7) du véhicule automobile (1) au moyen d'un dispositif détecteur (4) côté véhicule,
une part de la place de stationnement (9) qui est occupée par le gradin (10) le long d'un sens d'expansion (R) de la place de stationnement (9) étant déterminée et une position de stationnement (S1, S2) pour le véhicule automobile (1) étant déterminée en fonction de la part occupée par le gradin (10), dans laquelle le véhicule automobile (1) est positionnée au moins partiellement sur le gradin (10) après avoir terminé la manoeuvre d'entrée en stationnement au moins semi-autonome, **caractérisé en ce que**
la place de stationnement (9) reconnue est une place de stationnement transversale et la part occupée par le gradin (10) de la place de stationnement transversale permet de déterminer si le véhicule automobile (1) est positionné dans la première position de stationnement (S1) avec les roues d'un seul essieu ou dans la deuxième position de stationnement (S2) avec les roues des deux essieux sur le gradin (10).

2. Procédé selon la revendication 1, **caractérisé en ce qu'**une part de la place de stationnement (9) occupée par le gradin (10) est reconnue dans un sens de profondeur comme étant le sens d'expansion (R) de la place de stationnement (9).

3. Procédé selon la revendication 1 ou 2, **caractérisé en ce qu'**au moins une délimitation de place de stationnement qui délimite la place de stationnement (9) est reconnue, une expansion (13) de la place de stationnement (9) dans le sens d'expansion (R) prédéterminé est déterminée à l'aide de la délimitation de place de stationnement et la part occupée par le gradin (10) est déterminée en se basant sur l'expansion (13) .

4. Procédé selon la revendication 3, **caractérisé en ce que** la délimitation de place de stationnement reconnue est au moins un véhicule automobile (17) qui est stationné adjacent à la place de stationnement (9), au moins une dimension géométrique du véhicule automobile (17) stationné adjacent est déterminée et l'expansion (13) de la place de stationnement (9) est déterminée à l'aide de l'au moins une dimension géométrique du véhicule automobile (17) stationné adjacent.

5. Procédé selon la revendication 3 ou 4, **caractérisé en ce que** la délimitation de place de stationnement reconnue est un marquage sur une surface de la place de stationnement (9) et l'expansion (13) de la place de stationnement (9) est déterminée à l'aide du marquage.

6. Procédé selon l'une des revendications précédentes, **caractérisé en ce que** la position de stationnement (S1, S2) respective est déterminée en déterminant un nombre de roues du véhicule automobile (1) correspondant à la part occupée par le gradin (10) avec lesquelles le véhicule automobile (1) sera positionné sur le gradin (10) après avoir terminé la manoeuvre d'entrée en stationnement au moins semi-autonome.

7. Procédé selon la revendication 6, **caractérisé en ce qu'**une première position de stationnement (S1) est déterminée pour le véhicule automobile (1), dans laquelle le véhicule automobile (1) est positionné avec deux roues sur le gradin (10) lorsque la part occupée par le gradin (10) est inférieure à une valeur de seuil (G) prédéterminée, et une deuxième position de stationnement (S2) est déterminée pour le véhicule automobile (1), dans laquelle le véhicule automobile (1) est positionné avec quatre roues sur le gradin (10) lorsque la part occupée par le gradin (10) est supérieure à la valeur de seuil (G) prédéterminée.

8. Procédé selon la revendication 7, **caractérisé en ce que** la valeur de seuil (G) prédéterminée est une valeur de 80 %.

9. Procédé selon la revendication 7 ou 8, **caractérisé en ce que** la place de stationnement (9) reconnue est une place de stationnement longitudinale et la part occupée par le gradin (10) sert à décider si le véhicule automobile (1) est positionné dans une première position de stationnement (S1) avec les roues d'un seul côté du véhicule automobile (1) ou dans une deuxième position de stationnement (S2) avec les roues des deux côtés du véhicule automobile (1) sur le gradin (10) .

10. Procédé selon l'une des revendications précédentes, **caractérisé en ce que** la place de stationnement (9) qui présente le gradin (10) et la part de la place de stationnement (9) occupée par le gradin (10) le long du sens d'expansion (R) sont reconnues au moyen d'un capteur à ultrasons et/ou d'un système de balayage à laser et/ou d'une caméra en tant que dispositif détecteur (4) côté véhicule.

11. Système d'assistance au conducteur (2) pour un véhicule automobile (1) destiné à l'entrée en stationnement au moins semi-autonome d'un véhicule automobile (1) dans une place de stationnement (9) qui présente un gradin (10), lequel est conçu pour mettre en oeuvre un procédé selon l'une des revendications précédentes.

12. Véhicule automobile (1) équipé d'un système d'assistance au conducteur (2) selon la revendication 12.
